# EUROPEAN PATENT APPLICATION

(11) **EP 1 195 919 A1**
(43) Date of publication of application: **10.04.2002**
(21) Application number: 01934415.9
(22) Date of filing: 30.05.2001
(51) Int. Cl.: H04B 1/707, H04J 13/04, H04Q 7/38

(54) **RADIO RECEIVING DEVICE AND RADIO RECEIVING METHOD**

(30) Priority: 30.05.2000 JP 2000160155
(71) Applicant: MATSUSHITA ELECTRIC INDUSTRIAL CO., LTD., Kadoma-shi, Osaka 571-8501 (JP)
(72) Inventor: AIHARA, Koichi, Yokosuka-shi, Kanagawa 239-0841 (JP); SUZUKI, Hidetoshi, Yokosuka-shi, Kanagawa 239-0847 (JP)
(74) Representative: Grünecker, Kinkeldey, Stockmair & Schwanhäusser Anwaltssozietät
(86) International application number: JP0104541
(87) International publication number: WO0193447

(57) **Abstract**

When it is necessary to create a delay profile for a single base station, such as when on standby, a switching determination section 103 switches a switch 104 to the correlation value calculator 106 side, and the correlation value calculator 106 performs despreading processing with a spreading code corresponding to one base station for a signal received at any time. When it is necessary to create a delay profile for a plurality of base stations, such as at the time of handover, the switching determination section 103 switches the switch 104 to the received signal accumulation section 105 side, and the correlation value calculator 106 performs despreading processing using despreading codes corresponding to a plurality of base stations for the same received signal held temporarily in the received signal accumulation section 105.

## Description

### Technical Field

The present invention relates to a radio receiving apparatus and radio receiving method.

### Background Art

The present inventors have previously invented an accumulation type radio receiving apparatus with the object of improving cell search performance, and so forth. This accumulation type radio receiving apparatus holds received data temporarily in memory, etc., and repeatedly performs despreading processing on that held data with spreading codes assigned to individual base stations. This invention is described in Japanese Patent No.HEI 10-292545.

In mobile communications, a radio receiving apparatus may perform in-phase addition of received signals in order to improve reception characteristics.

However, as an accumulation type radio receiving apparatus is an apparatus for obtaining despreading results for a plurality of base stations from the same received signal, it is not particularly suitable for a situation in which a signal is received from a single base station.

Also, with in-phase addition, reception characteristics greatly improve when the phases of a plurality of signals are the same, but reception characteristics degrade proportionally as the phase difference between signals increases due to fluctuations in propagation conditions and so forth.

### Disclosure of Invention

It is an object of the present invention to provide a radio receiving apparatus and radio receiving method that enable reception characteristics to be improved by performing suitable reception according to the communication state of the station in question and the reception state of a signal.

In order to achieve the above object, in the present invention the performing of respective despreading processing with spreading codes corresponding to a plurality of communication partners on the same temporarily held received signal, and the performing of despreading processing with a spreading code corresponding to a single communication partner on a signal received at any time, are switched as appropriate according to the communication state of the station in question.

Also, in order to achieve the above object, in the present invention the number of signals for in-phase addition next time is controlled according to a value calculated from a signal after in-phase addition.

### Brief Description of Drawings

FIG.1 is a main block diagram showing an outline configuration of a radio receiving apparatus according to Embodiment 1 of the present invention;
FIG.2 is a main block diagram showing an outline configuration of a radio receiving apparatus according to Embodiment 2 of the present invention;
FIG.3 is a drawing showing an example of output from the in-phase addition section of a radio receiving apparatus according to Embodiment 2 of the present invention;
FIG.4 is a main block diagram showing an outline configuration of a radio receiving apparatus according to Embodiment 3 of the present invention;
FIG.5 is a main block diagram showing an outline configuration of a radio receiving apparatus according to Embodiment 4 of the present invention; and
FIG.6 is a main block diagram showing an outline configuration of a radio receiving apparatus according to Embodiment 5 of the present invention.

### Best Mode for Carrying out the Invention

With reference now to the accompanying drawings, embodiments of the present invention will be explained in detail below.

### (Embodiment 1)

A radio receiving apparatus according to Embodiment 1 of the present invention creates a delay profile by switching as appropriate between the repeated performing of despreading processing on a temporarily held received signal, and the performing of despreading processing on a signal received at any time, according to the communication state of the station in question.

An accumulation type radio receiving apparatus previously invented by the present inventors holds a received signal temporarily in memory, etc., and repeatedly performs despreading processing on that held signal with spreading codes assigned to individual base stations. By this means, an improvement in cell search precision, etc., is achieved. This invention is described in Japanese Patent No.HEI 10-292545, entire content of which is expressly incorporated by reference herein.

However, since an accumulation type radio receiving apparatus creates a delay profile by repeatedly using received signals temporarily held in memory, etc., reception characteristics can be improved in a situation where communication is carried out with a plurality of base stations, but it is not particularly suitable for a situation where communication is carried out with a single base station. The reason is that, in a situation where a radio receiving apparatus carries out communication with a single base station, it is sufficient to create a delay profile for that single station, and so creating a delay profile for signals received in real time gives a greater improvement in reception characteristics.

Thus, with a radio receiving apparatus according to this embodiment, a delay profile is created by switching as appropriate between the case where despreading processing is performed repeatedly on temporarily held received signals, and the case where despreading processing is performed at any time on a received signal, according to the communication state of the station in question.

That is to say, with a radio receiving apparatus according to this embodiment, when it is necessary to create a delay profile for a plurality of base stations, such as at the time of handover, despreading processing is performed repeatedly for held received signals, but when it is necessary to create a delay profile for a single base station, such as when on standby, despreading processing is performed at any time for a received signal.

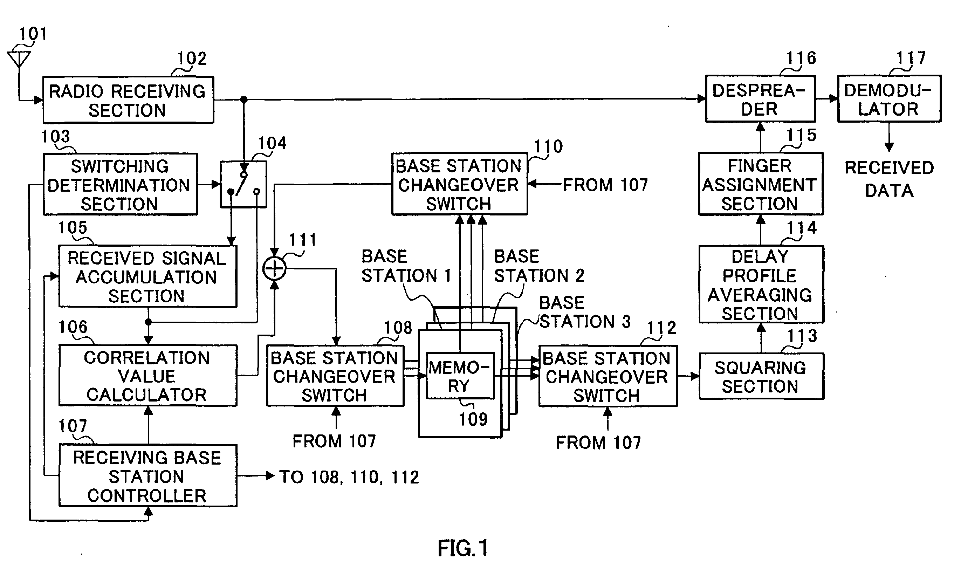

The configuration of a radio receiving apparatus according to this embodiment will be described below. FIG.1 is a main block diagram showing an outline configuration of a radio receiving apparatus according to Embodiment 1 of the present invention.

In FIG.1, a radio receiving section 102 executes predetermined radio processing (down-conversion, A/D conversion, etc.) on a signal received via an antenna 101. A switching determination section 103 determines the communication state of the station in question and performs switching control of a switch 104 according to the communication state.

A received signal accumulation section 105 temporarily holds a received signal output from the radio receiving section 102 every predetermined unit. A correlation value calculator 106 performs despreading processing on a received signal. When a received signal is held in the received signal accumulation section 105, a receiving base station controller 107 sequentially selects a base station subject to reception. When a received signal is held in the received signal accumulation section 105, base station changeover switches 108, 110, and 112 are subjected to switching control by the receiving base station controller 107 so that a correlation value is subjected to in-phase addition for each base station.

A memory 109 and adder 111 perform in-phase addition of a signal (that is, correlation value) output from the correlation value calculator 106. The same number of memories 109 are provided as the number of base stations that may be subject to reception. Here, for the sake of explanation, the number of base stations that may be subject to reception is assumed to be three: base stations 1 through 3.

A squaring section 113 squares the signal that has undergone in-phase addition by the memory 109 and adder 111. A delay profile averaging section 114 calculates the delay profile average value. A finger assignment section 115 performs finger assignment for a dedicated communication channel signal, etc., according to the averaged delay profile.

A despreader 116 executes despreading processing for a dedicated communication channel signal, etc., in accordance with the finger assignment. A demodulator 117 executes predetermined demodulation processing on a dedicated communication channel signal, etc., after despreading. By this means, received data is obtained.

Next, the operation of a radio receiving apparatus that has the above configuration will be described.

First, the operation will be described for a case where it is necessary to create a delay profile for a single base station, such as when on standby. When it is necessary to create a delay profile for a single base station, such as when on standby, the switch 104 is switched to the correlation value calculator 106 side by the switching determination section 103, and the radio receiving section 102 and correlation value calculator 106 are connected. Also, a signal indicating the single base station (here, assumed to be base station 1) currently communicating with the station in question is output by the switching determination section 103 to the receiving base station controller 107.

As the switch 104 is switched to the correlation value calculator 106 side, a received signal is output directly from the switch 104 to the correlation value calculator 106. That is to say, when it is necessary to create a delay profile for a single base station, such as when on standby, a received signal is not held in the received signal accumulation section 105.

When a received signal is output to the correlation value calculator 106, a base station number indicating base station 1 is output from the receiving base station controller 107 to the correlation value calculator 106 and base station changeover switches 108, 110, and 112.

In the correlation value calculator 106, despreading processing is executed on the received signal by means of the despreading code assigned to base station 1 in accordance with the above base station number.

At this time, also, base station changeover switch 108 connects the adder 111 to the memory 109 for base station 1 in accordance with the above base station number. Moreover, base station changeover switch 110 connects the memory 109 for base station 1 to the adder 111, and base station changeover switch 112 connects the memory 109 for base station 1 to the squaring section 113. The signal output from the correlation value calculator 106 is then subjected to in-phase addition a predetermined number of times for base station 1 by means of the memory 109 and adder 111.

A signal that has undergone in-phase addition the predetermined number of times is output from the memory 109 to the squaring section 113, is squared by the squaring section 113, and is averaged by the delay profile averaging section 114. Thus, an averaged delay profile is output from the delay profile averaging section 114. A signal indicating the position of each finger in the averaged delay profile is then output to the despreader 116.

According to the timing at which each finger rises, the despreader 116 performs despreading processing for a dedicated communication channel signal, etc., transmitted from base station 1 on which predetermined radio processing has been executed by the radio receiving section 102. A despread dedicated communication channel signal, etc., is subjected to predetermined demodulation processing by the demodulator 117, and by this means data from base station 1 is obtained.

Next, the operation will be described for a case where it is necessary to create a delay profile for a plurality of base stations, such as at the time of handover. Where the operation is the same as for the case where it is necessary to create a delay profile for a single base station, such as when on standby, the relevant explanation is omitted.

When it is necessary to create a delay profile for a plurality of base stations, such as at the time of handover, the switch 104 is switched to the received signal accumulation section 105 side by the switching determination section 103, and the radio receiving section 102 and received signal accumulation section 105 are connected. Also, a signal indicating a plurality of base stations (here, base stations 1 through 3) is output by the switching determination section 103 to the receiving base station controller 107.

As the switch 104 is switched to the received signal accumulation section 105 side, a received signal is output from the switch 104 to the received signal accumulation section 105. That is to say, when it is necessary to create a delay profile for a plurality of base stations, such as at the time of handover, a received signal is temporarily held in the received signal accumulation section 105.

A received signal held in the received signal accumulation section 105 is output to the correlation value calculator 106 in accordance with an instruction from the receiving base station controller 107. At this time, a base station number indicating base station 1 is output from the receiving base station controller 107 to the correlation value calculator 106 and base station changeover switches 108, 110, and 112.

In the correlation value calculator 106, despreading processing is executed on the received signal by means of the despreading code assigned to base station 1 in accordance with the above base station number.

At this time, also, base station changeover switch 108 connects the adder 111 to the memory 109 for base station 1 in accordance with the above base station number. Moreover, base station changeover switch 110 connects the memory 109 for base station 1 to the adder 111, and base station changeover switch 112 connects the memory 109 for base station 1 to the squaring section 113. The signal output from the correlation value calculator 106 is then subjected to in-phase addition a predetermined number of times for base station 1 by means of the memory 109 and adder 111.

Next, the same received signal as used for base station 1 is output from the received signal accumulation section 105 to the correlation value calculator 106 in accordance with an instruction from the receiving base station controller 107. At this time, a base station number indicating base station 2 is output from the receiving base station controller 107 to the correlation value calculator 106 and base station changeover switches 108, 110, and 112.

Thereafter, the same operations are performed as in the case of base station 1, and the signal output from the correlation value calculator 106 is subjected to in-phase addition a predetermined number of times for base station 2. For base station 3, also, the same kind of operations as described above are performed using the same received signal as used for base station 1 and base station 2, and the signal output from the correlation value calculator 106 is subjected to in-phase addition a predetermined number of times for base station 3.

Thus, according to a radio receiving apparatus of this embodiment, a delay profile is created by switching as appropriate between the repeated performing of despreading processing on a temporarily held received signal, and the performing of despreading processing on a signal received at any time, according to the communication state of the station in question, thereby enabling a delay profile to be created efficiently according to the communication state.

### (Embodiment 2)

A radio receiving apparatus according to Embodiment 2 of the present invention adaptively changes the number of signals subjected to in-phase addition (hereinafter referred to as "number of in-phase additions") according to the size of the phase difference between signals after in-phase addition.

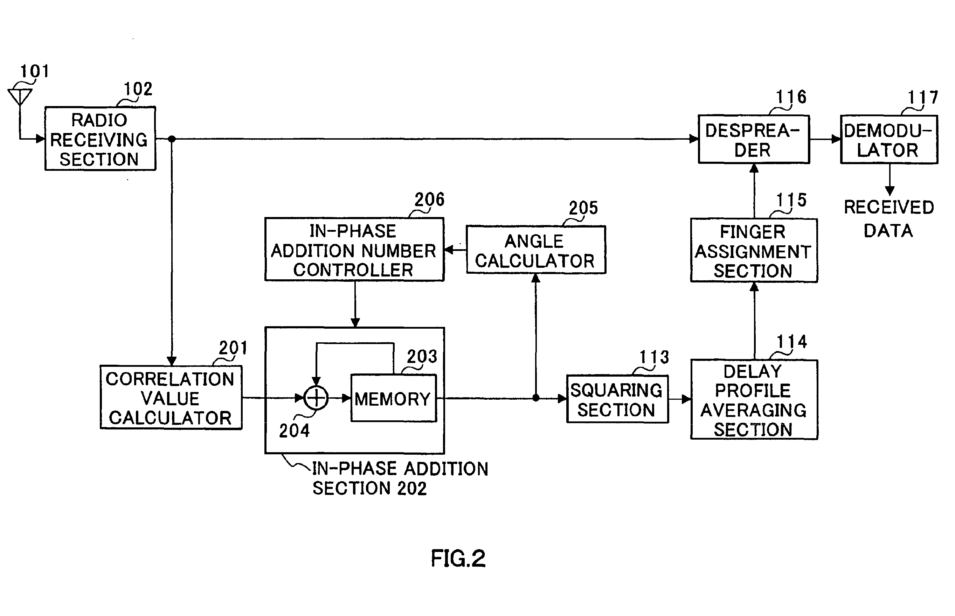

A radio receiving apparatus according to Embodiment 2 of the present invention will be described below. FIG.2 is a main block diagram showing an outline configuration of a radio receiving apparatus according to Embodiment 2 of the present invention. Parts in FIG.2 identical to those in Embodiment 1 are assigned the same codes as in Embodiment 1 and their detailed explanations are omitted.

In FIG.2, a correlation value calculator 201 performs despreading processing on a received signal. An in-phase addition section 202 is composed of a memory 203 and an adder 204, and performs in-phase addition of signals output from the correlation value calculator 201 while adaptively changing the number of in-phase additions. The method of changing the number of in-phase additions will be described later herein.

An angle calculator 205 calculates the angular difference (that is, the phase difference) in the I-Q plane between post-in-phase-addition signals output sequentially from the memory 203. An in-phase addition number controller 206 adaptively adjusts the number of in-phase additions according to the angular difference calculated by the angle calculator 205.

Next, the operation of a radio receiving apparatus that has the above configuration will be described. A signal output from the correlation value calculator 201 undergoes a plurality of in-phase additions by means of the memory 203 and adder 204. Here, for example, it is assumed that eight in-phase additions are carried out. The signal on which in-phase additions have been carried out is output to the angle calculator 205 and squaring section 113.

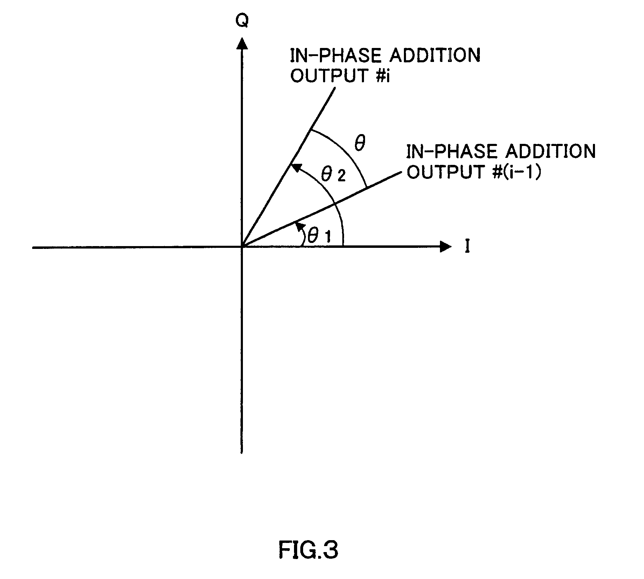

FIG.3 is a drawing showing an example of output from the in-phase addition section of a radio receiving apparatus according to Embodiment 2 of the present invention. Here, the signals output sequentially from the memory 203 after eight additions are shown as in-phase addition output #(i-1) and in-phase addition output #i, respectively.

In the angle calculator 205, angle θ between the in-phase addition outputs is calculated using the previous in-phase addition output # (i-1) angle θ₁ and the current in-phase addition output #i angle θ₂. To be specific, the angle calculator 205 first calculates angle θ₁ in the I-Q plane for in-phase addition output #(i-1) and angle θ₂ in the I-Q plane for in-phase addition output #i. Then the angle calculator 205 calculates the absolute value θ of the difference between θ₁ and θ₂. A signal indicating the calculated value of θ is output to the in-phase addition number controller 206.

In the in-phase addition number controller 206, θ calculated by the angle calculator 205 is compared with a predetermined threshold value for θ. The in-phase addition section 202 is then controlled by the in-phase addition number controller 206 so that the number of in-phase additions is decreased if θ calculated by the angle calculator 205 is greater than the predetermined threshold value, and the number of in-phase additions is increased if θ calculated by the angle calculator 205 is equal to or less than the predetermined threshold value.

In accordance with this control, the in-phase addition section 202 adjusts the number of in-phase additions when in-phase addition is next performed, and performs in-phase addition of the signal output from the correlation value calculator 201.

To be specific, if, for example, θ is 180 degrees when the in-phase addition section 202 performs in-phase addition with eight as the number of in-phase additions, and the predetermined threshold value is 70 degrees, the in-phase addition number controller 206 will set the number of in-phase additions in the next delay profile creation operation as four, half the previous number. By means of this control, θ will be smaller than 180 degrees when next calculated. Here, since the number of in-phase additions has been halved, θ should be approximately 90 degrees when next calculated.

To take another example, if θ is 30 degrees when the in-phase addition section 202 performs in-phase addition with eight as the number of in-phase additions, and the predetermined threshold value is 70 degrees, the in-phase addition number controller 206 will set the number of in-phase additions in the next delay profile creation operation as 16, twice the previous number.

The reason for controlling the number of in-phase additions in this way is that, in in-phase addition, the effect of in-phase addition is lost in proportion as angle θ (that is, the phase difference) between the signals subjected to in-phase addition increases. That is to say, since amplitude values of signals are added as vector values in in-phase addition, as angle θ between signals increases, the amplitude value of the signal after in-phase addition subjected to vector combination decreases. For example, when angle θ between signals is 180 degrees, if the amplitude value of each signal is the same, the amplitude value of the signal after in-phase addition will be 0.

In this embodiment, the in-phase addition number controller 206 may also have a configuration such that, when θ calculated by the angle calculator 205 is greater than a predetermined threshold value, the in-phase addition section 202 is controlled so as to make the number of in-phase additions one. That is to say, it is also possible to have power addition performed when θ calculated by the angle calculator 205 is greater than a predetermined threshold value.

Thus, according to a radio communication apparatus of this embodiment, the number of in-phase additions is changed adaptively according to the size of the phase difference between signals after in-phase addition, so that even if frequency error arises in received signals, the optimum delay profile can always be created without using a frequency estimation circuit.

### (Embodiment 3)

A radio receiving apparatus according to Embodiment 3 of the present invention has almost the same configuration as a radio receiving apparatus according to Embodiment 2, but differs in that, instead of calculating angle θ between in-phase addition outputs, it calculates the inner product between in-phase addition outputs obtained by means of a simpler computation than that used to calculate angle θ.

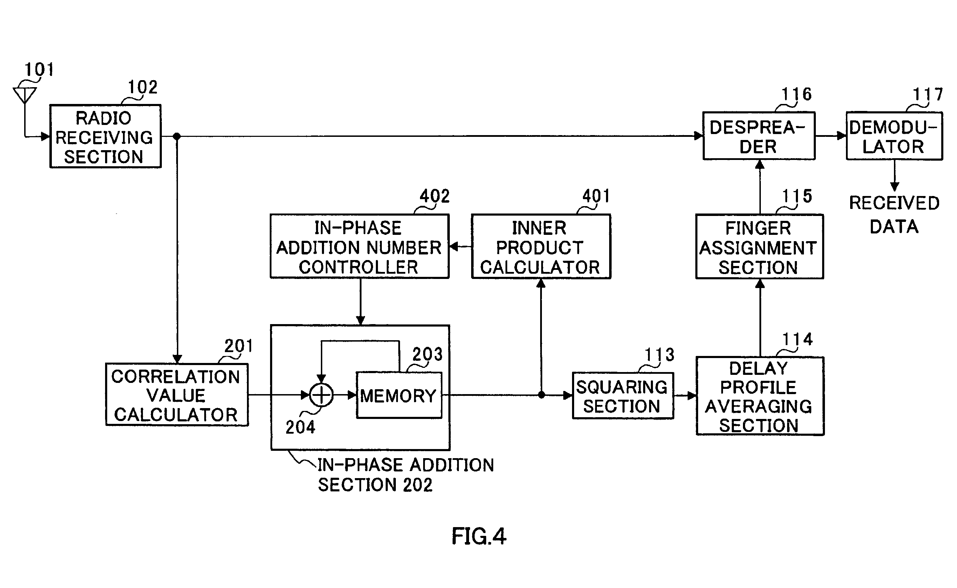

A radio receiving apparatus according to Embodiment 3 of the present invention will be described below. FIG.4 is a main block diagram showing an outline configuration of a radio receiving apparatus according to Embodiment 3 of the present invention. Parts in FIG.4 identical to those in Embodiment 2 are assigned the same codes as in Embodiment 2 and their detailed explanations are omitted.

In FIG.4, an inner product calculator 401 calculates the inner product between in-phase addition outputs. An in-phase addition number controller 402 adaptively adjusts the number of in-phase additions according to the inner product value calculated by the inner product calculator 401.

That is to say, the in-phase addition section 202 is controlled by the in-phase addition number controller 402 so that the number of in-phase additions is decreased if the inner product value calculated by the inner product calculator 401 is greater than a predetermined threshold value, and the number of in-phase additions is increased if the inner product value calculated by the inner product calculator 401 is less than or equal to the predetermined threshold value.

Thus, according to a receiving apparatus of this embodiment, instead of calculating angle θ between in-phase addition outputs, calculation is performed of the inner product between in-phase addition outputs obtained by means of a simpler computation than that used to calculate angle θ, and therefore the amount of computation can be reduced compared with Embodiment 2.

Also, according to a receiving apparatus of this embodiment, the same effect is obtained as by weighting by means of an amplitude value, and therefore it is possible to create a more optimal delay profile than in the case of Embodiment 2.

### (Embodiment 4)

A radio receiving apparatus according to Embodiment 4 of the present invention has almost the same configuration as a radio receiving apparatus according to Embodiment 2, but calculates angular difference θ only for in-phase addition outputs whose amplitude value is greater than a predetermined threshold value.

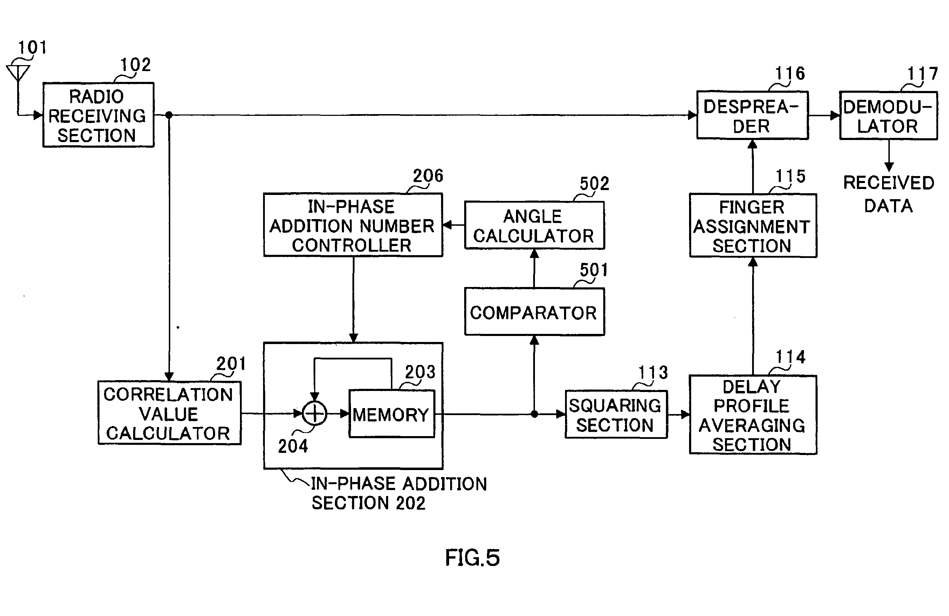

A radio receiving apparatus according to Embodiment 4 of the present invention will be described below. FIG.5 is a main block diagram showing an outline configuration of a radio receiving apparatus according to Embodiment 4 of the present invention. Parts in FIG.5 identical to those in Embodiment 2 are assigned the same codes as in Embodiment 2 and their detailed explanations are omitted.

In FIG.5, a comparator 501 compares the amplitude value of an in-phase addition output with a predetermined threshold value, and outputs to an angle calculator 502 only an in-phase addition output whose amplitude value is greater than the predetermined threshold value. The angle calculator 502 thus calculates angular difference θ only for in-phase addition outputs whose amplitude value is greater than the predetermined threshold value.

Thus, according to a radio receiving apparatus of this embodiment, angular difference θ is calculated only for in-phase addition outputs whose amplitude value is greater than a predetermined threshold value, and therefore it is possible to create a high-precision delay profile efficiently.

The present invention can also be implemented by combining this embodiment with a radio receiving apparatus according to Embodiment 3. That is to say, in a radio receiving apparatus according to Embodiment 3 it is also possible to calculate an inner product value only for in-phase addition outputs whose amplitude value is greater than a predetermined threshold value. Combined implementation enables a high-precision delay profile to be created efficiently.

### (Embodiment 5)

A radio receiving apparatus according to Embodiment 5 of the present invention has almost the same configuration as a radio receiving apparatus according to Embodiment 2, but calculates angular difference θ between in-phase addition outputs only for timing to which a finger is currently assigned.

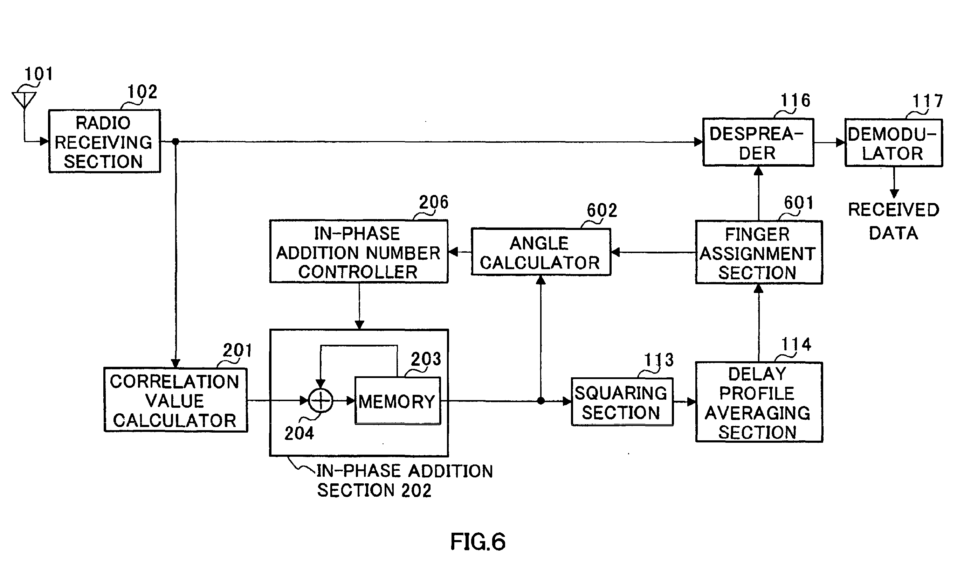

A radio receiving apparatus according to Embodiment 5 of the present invention will be described below. FIG.6 is a main block diagram showing an outline configuration of a radio receiving apparatus according to Embodiment 5 of the present invention. Parts in FIG.6 identical to those in Embodiment 2 are assigned the same codes as in Embodiment 2 and their detailed explanations are omitted.

In FIG.6, a finger assignment section 601 performs finger assignment for a dedicated communication channel signal, etc., and also outputs to an angle calculator 602 a signal indicating the timing to which a finger is currently assigned. The angle calculator 602 calculates angular difference θ between in-phase addition outputs only for timing to which a finger is currently assigned.

Thus, according to a radio receiving apparatus of this embodiment, angular difference θ between in-phase addition outputs is calculated only for timing to which a finger is currently assigned, and therefore it is possible to create a high-precision delay profile efficiently.

The present invention can also be implemented by combining this embodiment with a radio receiving apparatus according to Embodiment 3. That is to say, in a radio receiving apparatus according to Embodiment 3 it is also possible to calculate an inner product value between in-phase addition outputs only for only for timing to which a finger is currently assigned. Combined implementation enables a high-precision delay profile to be created efficiently.

Implementation is also possible by combining above-described Embodiment 1 with above-described Embodiments 2 through 5.

As described above, according to the present invention it is possible to improve reception characteristics by performing suitable reception according to the communication state of the station in question and the reception state of a signal.

This application is based on Japanese Patent Application No.2000-160155 filed on May 30, 2000, entire content of which is expressly incorporated by reference herein.

### Industrial Applicability

The present invention is applicable to a communication terminal apparatus and base station apparatus used in a mobile communication system.

## Claims

1. A radio receiving apparatus comprising:
a despreader that performs first despreading processing respectively with despreading codes corresponding to a plurality of communication partners for an identical received signal held temporarily, and performs second despreading processing with a despreading code corresponding to a single communication partner for a continuously received signal;
a switch that switches between the first despreading processing and the second despreading processing according to a communication state; and
an assignmenter that performs finger assignment according to a delay profile created using signals after despreading processing.

2. A radio receiving apparatus comprising:
an in-phase adder that performs a plurality of in-phase additions on signals after despreading;
a controller that indicates a number of signals for in-phase addition to said in-phase adder based on a value calculated from signals subjected to in-phase addition; and
an assignment unit that performs finger assignment according to a delay profile created using signals subjected to in-phase addition.

3. The radio receiving apparatus according to claim 2, wherein:
said calculated value is a phase difference between signals after in-phase addition; and
said controller decreases the number of signals subjected to in-phase addition when said phase difference is greater than a predetermined threshold value, and increases the number of signals subjected to in-phase addition when said phase difference is less than or equal to said predetermined threshold value.

4. The radio receiving apparatus according to claim 2, wherein:
said calculated value is an inner product between signals after in-phase addition; and
said controller decreases the number of signals subjected to in-phase addition when said inner product is greater than a predetermined threshold value, and increases the number of signals subjected to in-phase addition when said inner product is less than or equal to said predetermined threshold value.

5. The radio receiving apparatus according to claim 2, wherein said calculated value is calculated only from signals after in-phase addition whose amplitude value is greater than a predetermined threshold value.

6. The radio receiving apparatus according to claim 2, wherein said calculated value is calculated only for a timing assigned by said assignment unit.

7. A communication terminal apparatus provided with a radio receiving apparatus, said radio receiving apparatus comprising:
a despreader that performs first despreading processing respectively with despreading codes corresponding to a plurality of communication partners for an identical received signal held temporarily, and performs second despreading processing with a despreading code corresponding to a single communication partner for a continuously received signal;
a switch that switches between the first despreading processing and the second despreading processing according to a communication state; and
an assignmenter that performs finger assignment according to a delay profile created using signals after despreading processing.

8. A communication terminal apparatus provided with a radio receiving apparatus, said radio receiving apparatus comprising:
an in-phase adder that performs a plurality of in-phase additions on signals after despreading;
a controller that indicates a number of signals for in-phase addition to said in-phase adder based on a value calculated from signals subjected to in-phase addition; and
an assignment unit that performs finger assignment according to a delay profile created using signals subjected to in-phase addition.

9. A base station apparatus provided with a radio receiving apparatus, said radio receiving apparatus comprising:
a despreader that performs first despreading processing respectively with despreading codes corresponding to a plurality of communication partners for an identical received signal held temporarily, and performs second despreading processing with a despreading code corresponding to a single communication partner for a continuously received signal;
a switch that switches between the first despreading processing and the second despreading processing according to a communication state; and
an assignmenter that performs finger assignment according to a delay profile created using signals after despreading processing.

10. A base station apparatus provided with a radio receiving apparatus, said radio receiving apparatus comprising:
an in-phase adder that performs a plurality of in-phase additions on signals after despreading;
a controller that indicates a number of signals for in-phase addition to said in-phase adder based on a value calculated from signals subjected to in-phase addition; and
an assignment unit that performs finger assignment according to a delay profile created using signals subjected to in-phase addition.

11. A radio receiving method comprising:
a despreading step of performing first despreading processing respectively with despreading codes corresponding to a plurality of communication partners for an identical received signal held temporarily, and performs second despreading processing with a despreading code corresponding to a single communication partner for a continuously received signal;
a switching step of switching between the first despreading processing and the second despreading processing according to a communication state; and
an assigning step of performing finger assignment according to a delay profile created using signals after despreading processing.

12. A radio receiving method comprising:
an in-phase adding step of performing a plurality of in-phase additions on signals after despreading;
a controlling step of indicating a number of signals for in-phase addition to said in-phase adding step based on a value calculated from signals subjected to in-phase addition; and
an assigning step of performing finger assignment according to a delay profile created using signals subjected to in-phase addition.

## Amended claims

### Amended claims under Art. 19.1 PCT

1. A radio receiving apparatus comprising:
a despreader that performs first despreading processing respectively with despreading codes corresponding to a plurality of communication partners for an identical received signal held temporarily, and performs second despreading processing with a despreading code corresponding to a single communication partner for a continuously received signal;
a switch that switches between the first despreading processing and the second despreading processing according to a communication state; and
an assignmenter that performs finger assignment according to a delay profile created using signals after despreading processing.

2. (deleted)

3. (deleted)

4. (deleted)

5. (deleted)

6. (deleted)

7. A communication terminal apparatus provided with a radio receiving apparatus, said radio receiving apparatus comprising:
a despreader that performs first despreading processing respectively with despreading codes corresponding to a plurality of communication partners for an identical received signal held temporarily, and performs second despreading processing with a despreading code corresponding to a single communication partner for a continuously received signal;
a switch that switches between the first despreading processing and the second despreading processing according to a communication state; and
an assignmenter that performs finger assignment according to a delay profile created using signals after despreading processing.

8. (deleted)

9. A base station apparatus provided with a radio receiving apparatus, said radio receiving apparatus comprising:
a despreader that performs first despreading processing respectively with despreading codes corresponding to a plurality of communication partners for an identical received signal held temporarily, and performs second despreading processing with a despreading code corresponding to a single communication partner for a continuously received signal;
a switch that switches between the first despreading processing and the second despreading processing according to a communication state; and
an assignmenter that performs finger assignment according to a delay profile created using signals after despreading processing.

10. (deleted)

11. A radio receiving method comprising:
a despreading step of performing first despreading processing respectively with despreading codes corresponding to a plurality of communication partners for an identical received signal held temporarily, and performs second despreading processing with a despreading code corresponding to a single communication partner for a continuously received signal;
a switching step of switching between the first despreading processing and the second despreading processing according to a communication state; and
an assigning step of performing finger assignment according to a delay profile created using signals after despreading processing.

12. (deleted)
